Europäisches Patentamt

European Patent Office

Office européen des brevets

(19)

(11) Numéro de publication : **0 189 217**
**B1**

(12) **FASCICULE DE BREVET EUROPÉEN**

(45) Date de publication du fascicule du brevet :
23.11.89

(21) Numéro de dépôt : 86200011.4

(22) Date de dépôt : 08.01.86

(51) Int. Cl.⁴ : **G 01 S 17/02**, G 01 S 17/87,
G 01 S 7/48, F 41 G 3/06,
G 02 B 26/10, G 02 B 23/12

(54) Analyseur optico-mécanique ayant un champ de télémétrie fixe.

(30) Priorité : 11.01.85 FR 8500338

(43) Date de publication de la demande :
30.07.86 Bulletin 86/31

(45) Mention de la délivrance du brevet :
23.11.89 Bulletin 89/47

(84) Etats contractants désignés :
BE DE FR GB IT NL

(56) Documents cités :
EP--A-- 0 006 727
DE--A-- 3 104 318
FR--A-- 2 522 833

(73) Titulaire : TELECOMMUNICATIONS RADIOELECTRI-
QUES ET TELEPHONIQUES T.R.T.
88, rue Brillat Savarin
F-75013 Paris (FR)
FR
N.V. Philips' Gloeilampenfabrieken
Groenewoudseweg 1
NL-5621 BA Eindhoven (NL)
BE DE GB IT NL

(72) Inventeur : Loy, Fernand
SOCIETE CIVILE S.P.I.D. 209 rue de l'Université
F-75007 Paris (FR)

(74) Mandataire : Chaffraix, Jean et al
Société Civile S.P.I.D. 209, rue de l'Université
F-75007 Paris (FR)

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne un analyseur optico-mécanique à fonction d'imagerie et fonction de télémétrie associées, ledit analyseur comportant un vase Dewar, un détecteur d'imagerie agencé dans le vase Dewar, un système optique d'imagerie pour fournir l'image d'une scène sur le détecteur d'imagerie constitué lui-même, en allant du détecteur d'imagerie vers une pupille d'entrée, par un élément de balayage trame, un premier miroir de renvoi, des moyens de transport de pupille, lesdits premier miroir et moyens de transport étant disposés relativement pour que l'image virtuelle dudit détecteur dans le premier miroir de renvoi soit située sur la surface focale desdits moyens de transport, et un élément de balayage ligne pour produire un déplacement de l'image de la scène sur le détecteur d'imagerie dans le sens des lignes transversalement à la direction de la trame, une source laser à impulsions fournissant un faisceau de télémétrie, un détecteur de télémétrie agencé dans le vase Dewar, un système optique de focalisation pour focaliser le faisceau de télémétrie réfléchi par un objet de la scène sur le détecteur de télémétrie, le système d'imagerie et le système de focalisation comportant un système optique d'entrée commun incorporant ladite pupille d'entrée pour recevoir à la fois le faisceau d'imagerie relatif à la scène et le faisceau de télémétrie.

On connaît des systèmes d'imagerie thermique dans lesquels la scène est analysée point par point au moyen d'un analyseur optico-mécanique. Ces caméras thermiques sont, en général, équipées d'optiques infra-rouge de grand diamètre.

Lorsque la caméra thermique est associée à un télémètre laser, les optiques d'émission et de réception du télémètre ont aussi de grands diamètres.

Afin de réduire les dimensions et le prix de l'ensemble, il est avantageux d'utiliser la même optique pour l'imagerie thermique et la réception laser. L'émission laser est extérieure à la caméra thermique ; elle utilise une optique séparée dont l'axe est parallèle à l'axe de la réception laser.

Il est aussi avantageux, comme il est mentionné dans le préambule, de placer dans le même vase Dewar les détecteurs d'imagerie et de télémétrie de façon à n'avoir à refroidir qu'un seul vase.

On peut imaginer d'avoir un trajet commun pour l'imagerie et la réception de télémétrie depuis l'optique d'entrée jusqu'au détecteur. Ceci est possible pour les analyseurs qui n'ont qu'une direction de balayage. C'est le cas des analyseurs à « balayage parallèle » qui ont autant de détecteurs que de lignes balayées parce que le balayage est lent.

Dans le cas des analyseurs à « balayage série ou série-parallèle » qui ont deux directions de balayage comme en télévision classique, on a un balayage ligne très rapide et un balayage trame plus lent. La direction du champ analysé varie très rapidement dans le sens ligne au point que pendant le temps de propagation aller et retour de l'impulsion laser, la direction du champ de réception laser a tourné d'un angle égal à plusieurs fois le champ du laser. Pour éviter ce défaut il existe différentes solutions.

On peut par exemple contourner le balayage ligne au moyen de lames dichroïques qui réfléchissent le rayonnement laser et transmettent le reste du spectre.

On peut aussi contourner le balayage ligne séquentiellement au moyen d'éléments optiques commutables.

Ces solutions présentent les inconvénients d'avoir des pièces absorbantes comme les lames dichroïques ou des éléments commutables toujours difficiles à mettre en œuvre lorsqu'il s'agit de conserver une harmonisation précise.

Le but de l'invention est de pallier ces inconvénients au moyen d'une autre solution qui définit pour le trajet de télémétrie une direction fixe de l'espace indépendante de l'analyse ligne.

Conformément à l'invention, l'analyseur optico-mécanique défini au premier paragraphe est caractérisé en ce qu'il comporte dans ledit système optique de focalisation d'une part des moyens optiques pour diriger le faisceau de télémétrie en provenance de ladite pupille d'entrée, après passage de ce dernier sur une première partie de l'élément de balayage ligne, sur une deuxième partie de l'élément de balayage ligne, lesdits moyens optiques comportant en outre lesdits moyens de transport de pupille, d'autre part un ensemble de transport d'image réelle incorporant un deuxième miroir de renvoi, lesdits deuxième miroir et deuxième partie de l'élément de balayage ligne étant disposés relativement pour former une image réelle du détecteur de télémétrie sur la surface focale desdits moyens de transport de pupille et en ce que des moyens de synchronisation sont prévus pour commander à ladite source laser l'émission des impulsions de faisceau de télémétrie pour des positions spécifiques respectives desdits éléments de balayage trame et de balayage ligne.

On notera l'existence d'une demande EP-A 0 187 687 au nom des mêmes demandeurs, ayant la même date de dépôt que celle de la présente demande, désignant les mêmes Etats et ayant également pour objet un analyseur optico-mécanique ayant des fonctions d'imagerie et de télémétrie associées.

La description suivante en regard des dessins annexés, le tout donné à titre d'exemple, fera bien comprendre comment l'invention peut être réalisée.

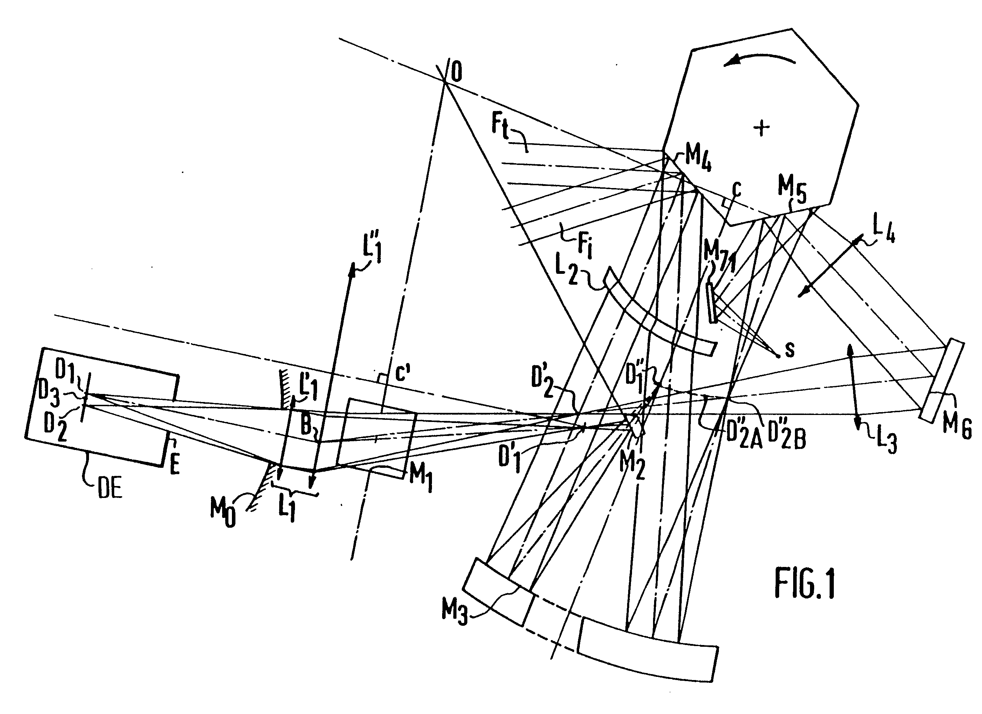

Le figure 1 est le schéma de principe d'un mode de réalisation de l'analyseur optico-mécanique selon l'invention.

La figure 2 représente le schéma des détecteurs.

Les figures 3 et 4 montrent respectivement les schémas d'une première variante et d'une deuxième variante dudit mode de réalisation de l'analyseur.

L'exemple de réalisation du système d'analyse optico-mécanique représenté sur la figure 1 a un champ d'analyse de ± 30° avec une pupille d'entrée ayant un diamètre de 12,5 mm. Il peut être précédé d'un système afocal pour l'observation d'un champ étroit. Par exemple avec un afocal de grossissement 20, le champ est de 3° × 3° avec une pupille d'entrée de 250 mm de diamètre.

La fonction imagerie comprend les éléments optiques suivants :

— une mosaïque de détecteurs D1 placés dans un vase Dewar DE et dont le champ de vue est limité par un écran froid E et par un miroir sphérique percé $M_0$ centré par exemple sur $D_1$,

— un transport dioptrique L1 formé de deux lentilles $L'_1$ et $L''_1$,

— un miroir trame M1 en faisceau convergent.

Ces éléments sont représentés rabattus sur la figure 1 alors qu'ils sont réellement dans un plan perpendiculaire à cette figure.

La suite des éléments optiques de la fonction imgerie comprend :

— un miroir plan de renvoi M2

— un transport de pupille concentrique de centre C formé d'un miroir sphérique M3 et d'une lentille correctrice sphérique $L_2$ en germanium,

— un polygone tournant à six faces en faisceau parallèle. La réflexion du faisceau incident d'imagerie $F_i$ à un instant donné s'effectue par exemple sur la face $M_4$ du polygone.

Le faisceau d'imagerie issu des détecteurs D1, suivant le sens inverse du trajet du faisceau incident médian provenant du champ de vision, converge en $D'_1$ image réelle de D1 fournie par les éléments L1 et M1. L'image virtuelle $D''_1$ de D1 dans le miroir de renvoi M2 est située sur la surface focale du transport de pupille concentrique M3 et $L_2$ de centre C.

La perpendiculaire en C à l'axe principale $CD''_1$ du transport de pupille (M3 + $L_2$) rencontre en 0 le plan du miroir de renvoi M2.

Le miroir trame M1 tourne autour de l'axe OC' image de OC dans le miroir M2.

Le transport dioptrique L1 est composé de deux lentilles $L'_1$ et $L''_1$. La lentille $L''_1$ a son foyer en $D'_1$. Elle est centrée sur l'axe $D'_1C'$. La lentille $L'_1$ est centrée sur l'axe BD parallèle à $D'_1C'$.

Si le plan de la moisaïque de détecteurs D1 est perpendiculaire à l'axe BD1, le plan de l'image $D'_1$ est perpendiculaire à $D'_1C'$ et le plan de l'image $D''_1$ est perpendiculaire à l'axe principal $CD''_1$.

La pupille d'entrée de l'analyseur est sensiblement située sur la face M4 du polygone qui tourne autour d'un axe perpendiculaire au plan de la figure. Le transport de pupille $L_2$ + M3 forme l'image de cette pupille d'entrée sur le miroir trame M1 animé d'un mouvement en dents de scie autour de l'axe OC'.

Le champ de vue du détecteur D1 est fixe.

Le rendement de balayage est d'environ 0,8 pour le mouvement trame (c'est le rapport des temps de balayage aux instants de passage à l'amplitude maximum et de retour rapide à l'amplitude nulle pour ce mode de balayage en dents de scie).

Le rendement de balayage est d'environ 0,5 pour le mouvement ligne. Cette valeur est due au fait que le faisceau d'imagerie tourne d'un angle moitié de celui du rayon du polygone.

La fonction télémétrie comporte les éléments optiques suivants :

— un détecteur de télémétrie D2 placé dans le même vase Dewar que celui d'imagerie,

— le transport dioptrique L1,

— le miroir trame M1,

— le transport d'image formé par les lentilles $L_3$ + $L_4$, le miroir de renvoi M6 du faisceau issu de $L_3$ sur $L_4$ et la face M5 du polygone,

— le transport de pupille $L_2$ + $M_3$,

— la face M4 du polygone sur laquelle se réfléchit le faisceau incident de télémétrie $F_t$.

Le faisceau de télémétrie issu du détecteur D2 suivant le sens inverse du trajet du faisceau incident médian provenant du champ de vision converge en $D'_2$ image réelle de D2 formée par les éléments M1 et L1. Le transport d'image constitué par $L_3$, M6, $L_4$ et la face M5 de première réflexion du faisceau sur le polygone en faisceau convergent, forme de $D'_2$ une autre image réelle occupant sur la surface focale du transport de pupille les positions pouvant varier de $D''_{2A}$ à $D''_{2B}$ selon la variation angulaire du polygone. $D''_{2A}$ est la position à l'instant du tir laser ; $D''_{2B}$ est la position à l'instant de la réception de l'écho laser pour la portée maximale du télémètre laser. Le schéma de principe de la figure 1 correspond à cette dernière position.

Selon l'invention, le trajet de télémétrie est ainsi différent du trajet d'imagerie. La fonction télémétrie ne nécessite aucune commutation d'éléments optiques. Les fonctions de télémétrie et d'imagerie sont simultanées. Alors que l'image du paysage donnée par le trajet d'imagerie balaye les détecteurs D1 pendant la rotation du polygone, l'image du paysage donnée par le trajet de télémétrie est fixe sur le détecteur D2 lorsque le polygone tourne. La fixité du champ de télémétrie pour cet exemple de réalisation de l'analyseur est approximativement réalisée si la position du polygone par rapport à $CD''_1$ est choisie pour que $HD''_{2A}$ soit sensiblement égale à $CD''_1$ à l'instant du tir de télémétrie, H étant la trace sur le polygone de l'axe du faisceau passant par $D''_2$. Ce champ coïncide avec le réticule de l'analyseur.

Le tir laser synchronisé avec les balayages de l'analyseur est déclenché lorsque le miroir trame est en position « centre du champ vertical » et lorsque le polygone est en position « centre du champ + 8°''.

La télémétrie est possible entre les positions du polygone « centre du champ + 8°'' correspondant à une cible à distance nulle et « centre du champ + 12°'' correspondant à une cible à 9 km. Cette limitation est liée au dimensionnement des éléments optiques du transport de pupille.

Pendant le temps de propagation de l'impulsion lumineuse qui est au plus égal à 6 μs pour la distance inférieure à 9 km, le mouvement du miroir trame peut être négligé vis-à-vis de l'étendue du champ de télémétrie.

Le réticule de l'analyseur est positionné au centre du champ de réception laser.

La fonction qui détermine la formation de ce réticule comprend une source rectangulaire S de 50 μm × 400 μm, un miroir de renvoi M7[1] du faisceau issu de ladite source sur la face de première réflexion M5 du faisceau de télémétrie sur le polygone et les autres éléments optiques du trajet de télémétrie ; les éléments L3, L4, M6 du transport d'image, le miroir trame M1 et le transport dioptrique L1, assurent la formation d'une image réelle de la source S sur un détecteur de déclenchement de réticule D3 placé dans le même vase Dewar que les détecteurs d'imagerie D1 et de télémétrie D2.

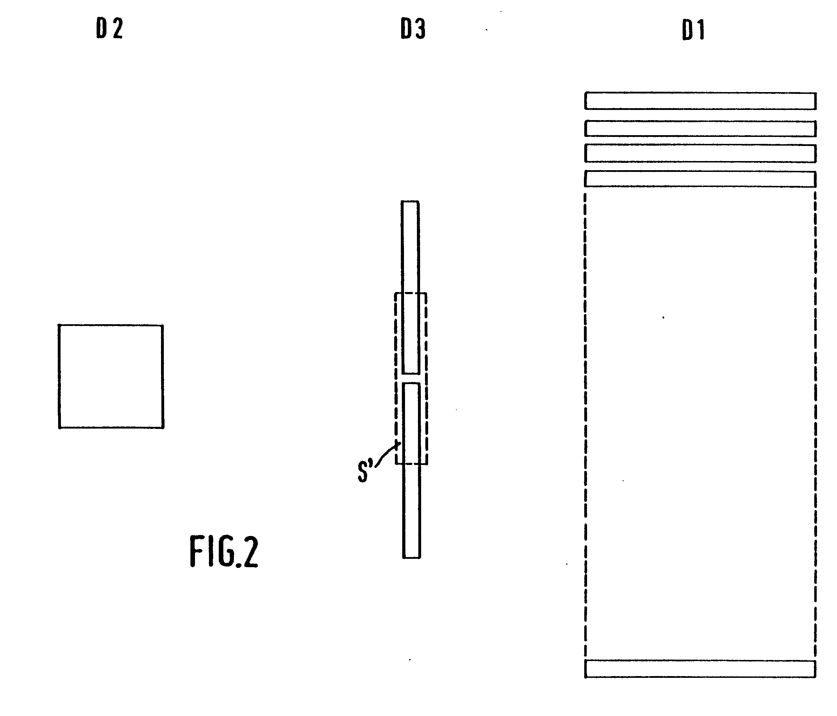

La figure 2 représente l'ensemble des trois détecteurs situés dans un vase Dewar commun.

Le détecteur d'imagerie D1 se compose de 31 éléments rectangulaires ou SPRITE (dénomination commerciale) ayant chacun les dimensions de 62,5 μm × 700 μm.

Le détecteur de télémétrie D2 est un élément carré de 300 μm × 300 μm.

Le détecteur de déclenchement du réticule D3 est composé de deux éléments rectangulaires de 50 μm × 500 μm.

L'image S' de la source représentée en pointillés balaye le détecteur D3 suivant les sens horizontal et vertical.

Le balayage suivant le sens horizontal provoque à l'instant du passage de cette image sur les deux éléments du détecteur D3 l'émission simultanée de deux signaux dont les amplitudes sont proportionnelles respectivement aux surfaces des deux éléments de D3 recouvertes par S' et le déclenchement de l'apparition de la barre verticale du réticule. Le résultat de la comparaison de l'amplitude de ces deux signaux déclenche lors de l'égalité des signaux l'apparition de la barre horizontale du réticule. Le miroir trame M1 occupe alors la position « centre de champ ». Ce dispositif est complété par un capteur analogique fixé sur le miroir M1 et qui contrôle l'amplitude de la dent de scie du balayage vertical.

La stabilité du réticule est obtenue grâce au trajet optique en très grande partie commun avec le trajet de télémétrie. L'harmonisation entre le champ de télémétrie et le réticule est donc indépendante des dérivés éventuelles de tous les éléments optiques communs aux deux trajets.

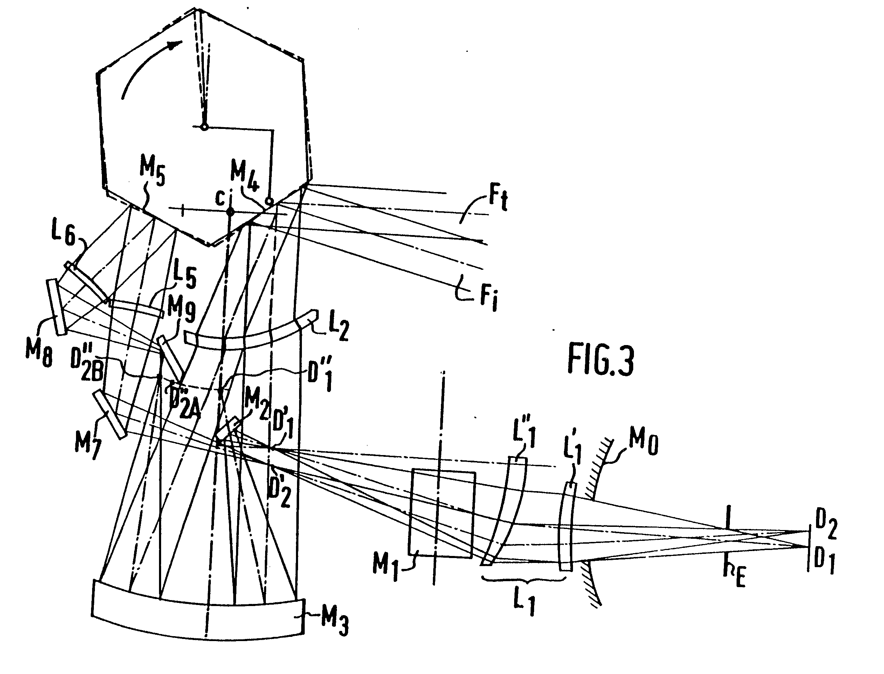

Sur la figure 3 représentant une première variante du mode de réalisation de l'analyseur optico-mécanique conforme à l'invention, les éléments correspondant à ceux de la figure 1 sont affectés des mêmes signes de référence.

Le trajet d'imagerie restant inchangé, on retrouve les détecteurs D1, l'écran E, le miroir sphérique M0, le transport dioptrique L1, le miroir trame M1, le miroir de renvoi M2 du faisceau issu de D'1 sur le transport de pupille L2 + M3 qui le

projette à l'infini dans une direction dépendant de la position angulaire du polygone.

Le transport d'image du trajet de télémétrie a été modifié pour que l'image D'2 du détecteur D2 soit située au foyer d'une lentille L5 de telle façon que le faisceau de télémétrie d'abord dévié par un miroir plan M7 est projeté ensuite en faisceau parallèle sur la face M5 du polygone. Le faisceau réfléchi sur cette face est repris par un système de focalisation et de renvoi comportant une lentille L6 associée aux miroirs plans de renvoi M8 et M9 pour être focalisé sur la surface focale du transport de pupille de D"2A en D"2B suivant la variation angulaire du polygone. Le faisceau de télémétrie est ensuite projeté à l'infini comme indiqué précédemment.

La position du polygone indiquée en traits pointillés sur la figure 3 correspond au tir laser. Lorsque le polygone a tourné d'un angle de 12° à partir de cette position, la portée maximale du télémètre est atteinte et le polygone vient dans la position indiquée en trait continu correspondant à l'instant de réception de l'écho laser.

La modification apportée dans cette première variante permet d'obtenir une direction de projection du faisceau de télémétrie rigoureusement indépendante de la position angulaire du polygone. Il faut et il suffit pour cela que la distance focale de la lentille L6 soit égale à la distance focale du transport de pupille L2 + M3.

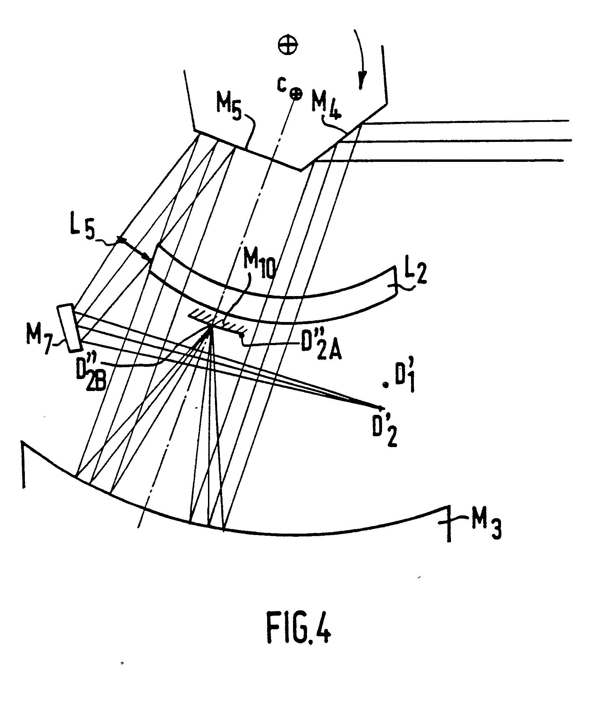

La figure 4 représente une deuxième variante du mode de réalisation de l'analyseur optico-mécanique selon l'invention et sur laquelle les éléments correspondant à ceux des figures 1 et 2 sont affectés des mêmes signes de référence.

La fonction imagerie identique à celle des analyseurs précédemment décrits n'est pas représentée sur cette figure.

La fonction télémétrie est reprise à partir du faisceau issu de l'image D'2 du détecteur qui est toujours formée au foyer de la lentille L5 associée au miroir de renvoi M7.

L'originalité de cette variante de l'analyseur consiste à utiliser le transport de pupille pour constituer ledit système de focalisation et de renvoi. Après sa première réflexion sur le polygone en faisceau parallèle, le faisceau de télémétrie traverse donc le transport de pupille L2 + M3 et vient se focaliser en D"2A ··· D"2B suivant la variation angulaire du polygone. Un miroir sphérique convexe M10 confondu avec la surface focale du transport de pupille renvoie le faisceau sur M3 puis sur le polygone à travers L2. Les deux moitiés de L2 + M3 ayant évidemment la même distance focale, la direction du faisceau de télémétrie est indépendante de la position angulaire du polygone.

Les deux variantes de l'analyseur ont également une fonction réticule non représentée et telle que le faisceau issu d'une source emprunte le trajet du faisceau de télémétrie après réflexion sur une face du polygone.

Il est possible de s'arranger pour que tout le faisceau de télémétrie passe dans le diaphragme froid dont les dimensions sont déterminées par la voie d'imagerie et ne modifie pas ainsi la détectivité du détecteur d'imagerie. Pour cela deux conditions sont à remplir :

1° Le transport d'image d'imagerie doit avoir un grandissement différent de celui du transport d'image de télémétrie de telle façon que pour le même diamètre de pupille d'entrée en imagerie et en télémétrie, l'ouverture du faisceau qui converge sur le détecteur de télémétrie est plus petite que l'ouverture du faisceau qui converge sur le détecteur d'imagerie.

2° Les positions respectives des détecteurs d'imagerie et de télémétrie doivent être convenablement choisies dans le vase Dewar.

Dans ces conditions, l'adjonction de la voie de télémétrie ne modifie pas les performances de la voie d'imagerie.

Le schéma du dispositif représenté sur la figure 3 répond à ces conditions.

## Revendications

1. Analyseur optico-mécanique à fonction d'imagerie et fonction de télémétrie associées, ledit analyseur comportant un vase Dewar (DE), un détecteur d'imagerie (D1) agencé dans le vase Dewar, un système optique d'imagerie pour fournir l'image d'une scène sur le détecteur d'imagerie constitué lui-même, en allant du détecteur d'imagerie (D1) vers une pupille d'entrée, par un élément de balayage trame (M1), un premier miroir de renvoi (M2), des moyens de transport de pupille (L2, M3), lesdits premier miroir et moyens de transport étant disposés relativement pour que l'image virtuelle dudit détecteur (D1) dans le premier miroir de renvoi soit située sur la surface focale desdits moyens de transport, et un élément de balayage ligne pour produire un déplacement de l'image de la scène sur le détecteur d'imagerie (D1) dans le sens des lignes transversalement à la direction de la trame, une source laser à impulsions fournissant un faisceau de télémétrie, un détecteur de télémétrie (D2) agencé dans le vase Dewar (DE), un système optique de focalisation pour focaliser le faisceau de télémétrie réfléchi par un objet de la scène sur le détecteur de télémétrie (D2), le système d'imagerie et le système de focalisation comportant un système optique d'entrée commun incorporant ladite pupille d'entrée pour recevoir à la fois le faisceau d'imagerie relatif à la scène et le faisceau de télémétrie, analyseur caractérisé en ce qu'il comporte dans ledit système optique de focalisation d'une part des moyens optiques pour diriger le faisceau de télémétrie en provenance de ladite pupille d'entrée (Ft), après passage de ce dernier sur une première partie de l'élément de balayage ligne (M4), sur une deuxième partie de l'élément de balayage ligne (M5), lesdits moyens optiques comportant en outre lesdits moyens de transport de pupille, d'autre part un ensemble de transport d'image réelle incorporant un deuxième miroir de renvoi (M6, M7), lesdits deuxième miroir et deuxième partie de l'élément de balayage ligne

(M5) étant disposés relativement pour former une image réelle du détecteur de télémétrie (D2) sur la surface focale desdits moyens de transport de pupille et en ce que des moyens de synchronisation sont prévus pour commander à ladite source laser l'émission des impulsions de faisceau de télémétrie pour des positions spécifiques respectives desdits éléments de balayage trame et de balayage ligne.

2. Analyseur optico-mécanique selon la revendication 1, caractérisé en ce qu'il comporte, des détecteurs vers la scène :

— pour la fonction d'imagerie : des moyens de transport dioptrique ((L1), un miroir en faisceau convergent oscillant (M1) constituant l'élément de balayage trame, ledit miroir de renvoi, plan, (M2), lesdits moyens de transport de pupille constitués par un miroir (M3) et une lentille (L2) sphériques, un polygone rotatif à faces réfléchissantes (M4) constituant l'élément de balayage ligne,

— pour la fonction de télémétrie : lesdits moyens de transport dioptrique (L1), ledit miroir de balayage trame (M1), ledit ensemble de transport d'image réelle (M6, L3), ladite deuxième partie de l'élément de balayage ligne (M5), ledit miroir sphérique (M3), ladite lentille sphérique (L2) et ladite première partie (M4) de l'élément de balayage ligne.

3. Analyseur optico-mécanique selon la revendication 2, caractérisé en ce que ledit ensemble de transport d'image réelle du faisceau de télémétrie est constitué par deux lentilles convergentes (L3, L4) disposées de part et d'autre dudit deuxième miroir de renvoi (M6).

4. Analyseur optico-mécanique selon la revendication 2, caractérisé en ce que ledit ensemble de transport d'image réelle du faisceau de télémétrie est constitué par ledit deuxième miroir de renvoi (M7), une lentille (L5) disposée entre ledit deuxième miroir et la deuxième partie (M5) dudit polygone rotatif, et un système de focalisation et de renvoi dudit faisceau de télémétrie disposé entre lesdites première et deuxième partie (M5) dudit polygone, et ayant une distance focale égale à la distance focale des moyens de transport de pupille (L2, M3).

5. Analyseur optico-mécanique selon la revendication 4, caractérisé en ce que ledit système de focalisation et de renvoi est constitué par une lentille convergente (L6) et deux miroirs plans de renvoi (M8, M9) disposés entre ladite deuxième partie (M5) dudit polygone et le miroir sphérique (M3).

6. Analyseur optico-mécanique selon la revendication 4, caractérisé en ce que ledit système de focalisation et de renvoi est constitué par lesdits moyens de transport de pupille (L2, M3) et par un miroir sphérique convexe (M10) confondu avec la surface focale desdits moyens de transport de pupille.

7. Analyseur optico-mécanique selon l'une des revendications 1 à 6, caractérisé en ce que lesdits moyens de synchronisation comportent des moyens de déclenchement pour déclencher l'émission des impulsions du faisceau de télémétrie lorsque l'élément de balayage trame (M1) se situe dans sa position d'oscillation médiane et que l'élément de balayage ligne (M4, M5) occupe une position en rotation comprise entre 8° et 12° au-delà de la position qui reflète le centre d'une ligne de l'image de la scène.

8. Analyseur optico-mécanique selon l'une des revendications 1 à 7 ayant en outre une fonction réticule, caractérisé en ce qu'il comporte une source rectangulaire (S), un miroir de renvoi (M71) du faisceau issu de ladite source sur ladite deuxième partie de l'élément de balayage ligne (M5), et un détecteur de déclenchement de réticule (D3) placé dans le vase Dewar disposés pour que les éléments dudit système de focalisation, pour le faisceau de télémétrie, qui sont agencés entre ladite deuxième partie (M5) et ledit vase Dewar (DE), assurent la formation de l'image de ladite source (S) sur ledit détecteur de réticule (D3).

9. Analyseur optico-mécanique selon la revendication 8, caractérisé en ce que ledit détecteur de déclenchement de réticule (D3) comporte deux éléments distincts superposés suivant un axe vertical et balayés par l'image (S') de ladite source rectangulaire (S), pour que chaque balayage suivant le sens horizontal provoque l'émission simultanée de deux signaux dont les amplitudes sont respectivement proportionnelles aux surfaces des deux éléments de détecteur (D3) recouvertes par l'image de la source, émission simultanée qui déclenche l'apparition de la barre verticale du réticule ainsi que la comparaison des deux signaux, et pour que le résultat de ladite comparaison déclenche, lors de l'égalité des deux signaux, l'apparition de la barre horizontale du réticule, en correspondance avec le passage de l'élément de balayage trame (M1) par sa position médiane.

## Claims

1. An opto-mechanical scanner having a scanning function and an associated ranging function, said scanner comprising a Dewar vessel (DE), an image detector (D1) arranged in the Dewar vessel, an optical imaging system for providing the image of a scene on the image detector constituted itself, from the image detector (D1) to an entrance pupil, by a frame scanning means (M1), a first mirror (M2), means (L2, M3) for transferring the pupil, said first mirror and transfer means being arranged such that the virtual image of the said detector (D1) in the first mirror is situated on the focal plane of the said transfer means, and a line-scanning means for shifting the image of the scene over the image detector (D1) in the line direction transversely to the frame direction, a pulsed laser source providing a ranging beam, a ranging detector (D2) arranged in the Dewar vessel (DE), an optical focusing system for focusing the ranging beam reflected by an object of the scene on the ranging detector (D2), the imaging and focusing systems comprising a common entrance optical system incorporating said entrance pupil for simultaneously receiving the imaging beam from the scene and the ranging beam, characterized in that it comprises in the said optical focusing system optical means for directing the ranging beam from the said entrance pupil (Ft) after passage of the latter on a first part of the line-scanning means (M4) on a second part of the line-scanning means (M5), said optical means comprising moreover, the said means for transferring the pupil, an assembly for transferring the real image incorporating a second mirror (M6, M7), said second mirror and second part of the line-scanning means (M5) being arranged so as to form a real image of the ranging detector (D2) on the focal plane of the said means for transferring the pupil, and in that synchronizing means are provided for making the said laser source unit ranging beam pulses for specific positions of the said frame-scanning and line-scanning means.

2. An opto-mechanical scanner as claimed in Claim 1, characterized in that it comprises, from the detectors to the scene :

— for the imaging functions : a refractive image transfer means (L1), an oscillating mirror (M1) for the convergent beam constituting the frame-scanning means, the said plane mirror (M2), the said pupil transfer means constituted by a spherical mirror (M3) and a lens (L2), a rotating polygon having reflecting faces (M4) constituting the line-scanning means,

— for the ranging function : the said refractice image transfer means (L1), the said frame-scanning mirror (M1), the said real image transfer assembly (M6, L3), the said second part of the line-scanning means (M5), the said spherical mirror (M3), the said spherical lens (L2) and the said first part (M4) of the line-scanning means.

3. An opto-mechanical scanner as claimed in Claim 2, characterized in that the said real image transfer assembly for the ranging beam is constituted by two convergent lenses (L3, L4) arranged on both sides of the said second mirror (M6).

4. An opto-mechanical scanner as claimed in Claim 2, characterized in that the said real image transfer assembly for the ranging beam is constituted by the said second mirror (M7), a lens (L5) arranged between the said second mirror and the second part (M5) of the said rotating polygon, and a system for focusing and diverting the said ranging beam arranged between the said first and second part (M5) of the said polygon, and having a focal length which is equal to the focal length of the pupil transfer means (L2, M3).

5. An opto-mechanical scanner as claimed in Claim 4, characterized in that said focusing and diverting system comprises a converging lens (L6) and two plane mirrors (M8, M9) arranged between the said second part (M5) of the said polygon and the spherical mirror (M3).

6. An opto-mechanical scanner as claimed in Claim 4, characterized in that said focusing and diverting system comprises said pupil transfer means (L2, M3) and a convex spherical mirror (M10) which coincides with the focal plane of said pupil transfer means.

7. An opto-mechanical scanner as claimed in any one of Claims 1 to 6, characterized in that the said synchronizing means comprise means for triggering the emission of ranging beam pulses when the frame-scanning means (M1) is in its central oscillation position and the line-scanning means (M4, M5) occupies a rotational position between 8° and 12° beyond the position which reflects the centre of a line of the scene image.

8. An opto-mechanical scanner as claimed in any one of the Claims 1 to 7, having also a reticule generating function, characterized in that it comprises a rectangular source (S), a mirror (M71) for reflecting the beam issuing from said source to said second part of the line-scanning means (M5) and a reticule triggering detector (D3) arranged in the Dewar vessel so as to ensure that the element of the said focusing system for the ranging beam arranged between the said second part (M5) and the said Dewar vessel (DE) form the image of said source (S) on the said reticule triggering detector (D3).

9. An opto-mechanical scanner as claimed in Claim 8, characterized in that said reticule-triggering detector (D3) comprises two separate elements which are superposed along a vertical axis and which are scanned by the image (S1), of said rectangular source (S), in order that each horizontal scan causes the simultaneous generation of two signals whose amplitudes are respectively proportional to the areas of the two detector elements (D3) covered by the image of the source, which simultaneous generation triggers the appearance of the vertical bar of the reticule as well as the comparison of the two signals and in order that the result of said comparison, when two signals are equal, triggers the appearance of the horizontal bar of the reticule corresponding to the passage of the frame-scanning means (M1) through its central position.

## Patentansprüche

1. Optisch-mechanische Abtasteinheit mit zugeordneten Abbildung- und Entfernungsmeßfunktionen, welche Einheit enthält ein Dewar-Gefäß (DE), einen Abbildungsdetektor (D1) im Dewar-Gefäß, ein optisches Abbildungssystem zum Erzeugen des Bildes einer Szene am Abbildungsdetektor, das zwischen dem Abbildungsdetektor (D1) und einer Eingangspupille angeordnet ist und besteht aus aus einem Bildrasterabtastelement (M1), einem ersten Umkehrspiegel (M2) und Pupillenabbildungsmitteln (L2, M3), wobei sowohl der erste Spiegel als diese Abbildungsmittel derart angeordnet sind, daß das durch den ersten umkehrspiegel geformmte Virtuellbild des Detektors (D1) sich in der Brennebene dieser Abbildungsmittel befindet, und einem Zeilenabtastelement zum Auslösen einer Verschiebung des Szenenbildes über den Abbildungsdetektor (D1) in Bildzeilenrichtung quer zur Richtung des Bildrasters, welche Einheit weiter enthält eine Impulslaserquelle zum Ausgeben eines Entfernungsmeßstrahles, einen Entfernungsmeßdetektor (D2) im Dewar-Gefäß (DE), ein optisches Fokussiersystem zum Fokussieren des Entfernungmeßstrahls, der an einem Objekt in der Szene reflektiert wird auf den Entfernungsmeßdetektor (D2), wobei das Abbildungssystem und das Fokusiersystem ein gemeinsames optisches Eingangssystem mit der gennanten Eingangspupille enthalten, um zugleich den Abbildungsstrahl der Szene und den Entfernungsmeßstrahl zu empfangen, dadurch gekennzeichnet, daß die Abtasteinheit im optischen Fokussiersystem einerseits optische Mittel aum Richten des aus der Eingangspupille (Ft) austretenden Entfernungsmessstrahls nach seiner Begegnung mit einen ersten Teil des Zeilenabtastelements (M4), auf einen zweiten Teil des Zeilenabtastelements (M5), wobei die optischen Mittel außerdem die genannte Pupillenabbildungsmittel enthalten, und andererseits eine Abbildungseinheit für das Realbild enthält, die mit einem zweiten Umkehrspiegel (M6, M7) bestückt ist, wobei sowohl der zweite Spiegel als der zweite Teil des Zeilenabtastelements (M5) derart angeordnet sind, daß ein Realbild des Entfernungsmeßdetektors (D2) in der Brennebene der Pupillenabbildungsmittel gebildet wird, und daß Synchronisationsmittel vorgesehen sind, zum Auslösen von Laserquelle Entfernungsmeßstrahlimpulse wenn die das Bildraterabtastelement und das Zeilenabtastelement bestimmte Positionen haben.

2. Optisch-mechanische Abtasteinheit nach Anspruch 1, dadurch gekennzeichnet, daß zwischen den Detektoren und der Szene folgende Elemente vorgesehen sind

— für die Abbildungsfunktion : lichtbrechende Mittel (L1), einen schwingenden konvergierenden Spiegel (M1), der das Bildrasterabtastelement bildet, den genannten flachen Umkehrspiegel (M2), die Pupillenabbildungsmittel, bestehend aus einem Spiegel (M3) einer sphärischen Linse (L2), und einem drehenden Vieleck mit reflektierenden Flächen (M4), das das Zeilenabtastelement darstellt,

— für die Entfernungsmeßfunktion : die lichtbrechenden Mittel (L1), den Bildrasterabtastspiegel (M1), die Realabbildungseinheit (M6, L3), den zweiten Teil des Zeilenabtastelements (M5), den sphärischen Spiegel (M3), die sphärische Linse (L2) und den ersten Teil (M4) des Zeilenabtastelements.

3. Optisch-mechanische Abtasteinheit nach Anspruch 2, dadurch gekennzeichnet, daß die Realabbildungseinheit für den Entfernungsmeßstrahls aus zwei konvergierenden Linsen (L3, L4) besteht, die an beiden Seiten des zweiten Umkehrspiegels (M6) angeordnet sind.

4. Optisch-mechanische Abtasteinheit nach Anspruch 2, dadurch gekennzeichnet, daß die Realabbildungseinheit für den Entfernungsmeßstrahls aus dem zweiten Umkehrspiegel (M7), einer Linse (L5) zwischen dem zweiten Spiegel und dem zweiten Teil (M5) des drehenden Vielecks und aus einem Fokussier- und Umkehrsystem für den Entfernungsmeßstrahls zwischen dem ersten und dem zweiten Teil (M5) des Vielecks besteht und eine Brennweite gleich der Brennweite der Pupillenabbildungsmittel (L2, M3) hat.

5. Optisch-mechanische Abtasteinheit nach Anspruch 4, dadurch gekennzeichnet, daß das Fokussier- und Umkehrsystem aus einer konvergierenden Linse (L6) und zwei flachen Umkehrspiegeln (M8, M9) besteht, die zwischen dem zweiten Teil (M5) des Vielecks und dem sphärischen Spiegel (M3) angeordnet sind.

6. Optisch-mechanische Abtasteinheit nach Anspruch 4, dadurch gekennzeichnet, daß das Fokussier- und Umkehrsystem aus den Pupillenabbildungsmitteln (L2, M3) und aus einem konvexen sphärischen Spiegel (M10) besteht, der mit der Brennebene der Pupillenabbildungsmittel zusammenfällt.

7. Optisch-mechanische Abtasteinheit nach einem der Ansprüche 1 bis 6, dadurch gekennzeichnet, daß die Synchronisationsmittel Auslösemittel zum Auslösen der Ausgabe von Entfernungsmeßstrahlimpulsen enthalten, während das Bildrasterabtastelement (M1) sich in seiner mittleren Schwingstellung befindet und das Zeilenabtastelement (M4, M5) eine Drehstellung einnimmt zwischen 8 and 12° ausgehend von der Position in der die Mitte einer Zeile des Szenenbildes reflektiert wird.

8. Optisch-mechanische Abtasteinheit nach einem der Ansprüche 1 bis 7 mit außerdem einer Visierfunktion, dadurch gekennzeichnet, daß die Abtasteinheit eine Rechteckquelle (S), einen Umkehrspiegel (M71) für das Richter der aus der Quelle tretenden Strahl auf dem zweiten Teil des Zeilenabtastelements (M5), einen Visierauslösedetektor (D3), der derart im Dewar-Gefäß angeordnet ist, daß die Elemente des Fokussierungssystems für den Entfernungsmeßstrahl, die zwischen dem zweiten Teil (M5) und dem Dewar-Gefäß (DE) angeordnet sind, die Bildformung der Quelle (S) am Visierdetektor (D3) gewährleisten.

9. Optisch-mechanische Abtasteinheit nach Anspruch 8, dadurch gekennzeichnet, daß der Visierauslösedetektor (D3) zwei unterschiedliche, entlang einer vertikalen Achse hinter einander angeordnet und von Bild (S') der Rechteckquelle (S) abgetastete Elemente enthält, derart daß jede Abtastung in horizontaler Richtung die gleichzeitige Ausgabe von zwei Signalen bewirkt, deren Amplituden je proportional der Oberflächen der beiden Detektorelementen (D3) sind, die vom Quellenbild bedeckt werden, und diese gleichzeitige Ausgabe das Erscheinen des Vertikalbalkens des Visiers sowie den Vergleich der beiden Signale auslöst, und derart daß das Ergebnis dieses Vergleichs bei Gleichheit der beiden Signale das Erscheinen des horizontalen Visierbalkens gleichzeitig mit dem Durchqueren des Bildrasterabtastelements (M1) durch seine mittere Stellung bewirkt.

FIG.1

EP 0 189 217 B1

EP 0 189 217 B1

D 2

D 3

D 1

S'

FIG.2

FIG.3

EP 0 189 217 B1

FIG.4

4